# EUROPEAN PATENT SPECIFICATION

(11) **EP 4 046 700 B1**
(45) Date of publication and mention of the grant of the patent: **20.11.2024**
(21) Application number: 22157680.4
(22) Date of filing: 21.02.2022
(51) Int. Cl.: A63F 13/426, A63F 13/2145, A63F 13/533, A63F 13/537

(54) **METHOD AND APPARATUS FOR PROVIDING TOUCH SCREEN INTERFACE**
VERFAHREN UND VORRICHTUNG ZUR BEREITSTELLUNG EINER BERÜHRUNGSBILDSCHIRMSCHNITTSTELLE
PROCÉDÉ ET APPAREIL POUR FOURNIR UNE INTERFACE D'ÉCRAN TACTILE

(30) Priority: 22.02.2021 KR 20210023696; 16.04.2021 KR 20210050013
(43) Date of publication of application: 24.08.2022
(73) Proprietor: Neople, Inc., Jeju-do 63091 (KR)
(72) Inventor: LEE, Jun Ho, Jeju-si (KR)
(74) Representative: Murgitroyd & Company

(56) References cited:
- US-A1- 2014 113 721
- US-A1- 2015 258 430
- US-A1- 2019 111 335
- TOUCHGAMEPLAY: "World of Tanks Blitz - iOS / Android - HD Gameplay Trailer (Livestream)", 26 June 2014 (2014-06-26), XP055943214, Retrieved from the Internet <URL:https://www.youtube.com/watch?v=ImI3nvCN874> [retrieved on 20220715]

## Description

### BACKGROUND

### 1. Field

One or more embodiments relate to a method and apparatus for providing a user interface for controlling a touch screen device, and more particularly, to a method and apparatus for providing a graphical user interface (GUI) for inputting a direction through a touch screen.

### 2. Description of the Related Art

With the development of computing devices, various applications are provided to users through various devices such as a computer, a mobile phone, a personal digital assistant (PDA), a video, or the like. A device controlled by a user may include at least one display, so that the user may control the device through an input device while watching an operation of an application executed on the device through the at least one display.

In a device in a mobile environment, such as a smartphone or a tablet, a touch screen that simultaneously functions as a display and an input device is widely used. In general, to control a touch screen device, a graphical user interface (GUI) is provided. Examples of such GUI interfaces are disclosed in US 2015/258430A1 and are shown, for example, in games such as "World of Tanks Blitz", example gameplay of which can be seen in the video *"World of Tanks Blitz* - *iOS*/*Android* - *HD Gameplay Trailer (Livestream);* by Touchgameplay, accessible at https://www.youtube.com/watch?v=Iml3nvCN874. When such a GUI is displayed on a touch screen, a user may control the touch screen device by performing a touch input to each component of the GUI.

However, due to the characteristics of a touch input, the GUI being covered by an input subject such as the user's hand for input is unavoidable. Accordingly, it is difficult for the user to recognize what kind of input he/she is actually performing while operating the GUI.

In particular, in the case of a GUI such as a virtual joystick used for an input of direction in a game application, because continuous and constant inputs are performed, it is difficult to check an operating situation by stopping an input. Accordingly, the difficulty and fatigue of operation through a touch screen GUI may increase, and the accuracy of operation may decrease.

In the case of an action genre game in which a battle is performed by operating a character, because the aiming and evasion actions for the overall battle, which are made by movement operation, are directly related to a play result due to the characteristics of the action genre game, the aiming and evasion actions need to be accurately performed. Therefore, a method which, when a user inputs a direction through a touch screen, enables the user to clearly and intuitively recognize an input which should be performed, a current input state, and an operation which is performed as a result of an input to input a desired direction is required.

### SUMMARY

The invention is defined by the appended set of claims, which provides for a method of controlling a touch screen device according to claim 1, and a game providing apparatus according to claim 15. Dependent claims 2-14 define preferred realisations of the invention.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates a game providing system including a server and a user terminal, according to various embodiments;
FIG. 2 is a flowchart illustrating a method of providing a touch screen interface, according to various embodiments;
FIG. 3 is a diagram for explaining a configuration of a touch screen interface according to various embodiments;
FIGS. 4A and 4B are diagrams each explaining a method of displaying a touch screen interface, according to various embodiments;
FIG. 5 is a flowchart illustrating a method of providing a touch screen interface, according to various embodiments;
FIGS. 6A, 6B, and 6C are diagrams each explaining a configuration of a touch screen interface, according to various embodiments;
FIG. 7 is a diagram for explaining an operation of a touch screen interface, according to various embodiments;
FIG. 8 is a diagram for explaining an operation of a touch screen interface, according to various embodiments;
FIGS. 9A and 9B are diagrams each illustrating an embodiment of using a touch screen interface of the present disclosure; and
FIG. 10 is a diagram for explaining a detailed configuration of a game providing apparatus according to various embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

The present disclosure will now be described more fully with reference to the accompanying drawings, in which example embodiments of the present disclosure are shown. Also, a method of configuring and using an electronic device according to an embodiment of the present disclosure will be described in detail with reference to the contents described in the accompanying drawings. Like reference numerals or signs in each drawing denote parts or components that perform substantially the same functions.

While such terms as "first," "second," etc., may be used to describe various components, such components must not be limited to the above terms. The above terms are used only to distinguish one component from another. For example, without departing from the scope of the present disclosure, a first component may be referred to as a second component, and similarly, a second component may also be referred to as a first component. The term 'and/or' includes a combination of a plurality of related items or any one of a plurality of related items.

The terms used in the present disclosure are used to describe the embodiments, and are not intended to limit and/or limit the present disclosure. An expression used in the singular encompasses the expression of the plural, unless it has a clearly different meaning in the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

In the present specification, when a portion is "connected to" another portion, this includes a case in which the portions are electrically connected with another device therebetween, as well as a case in which the portions are directly connected. Also, when it is said that a portion includes a certain component, it means that other components may be further included, rather than excluding other components, unless otherwise stated. In addition, terms such as "...unit" and "module" described in the specification mean a unit that processes at least one function or operation, which may be implemented as hardware or software, or a combination of hardware and software.

In the following present disclosure, a game providing apparatus may be a game server, a user terminal, a game system including a game server and a user terminal, or an independent apparatus.

In the following present disclosure, a server controlling a user terminal may mean that the server provides an output (all output apparatuses in the user terminal such as a screen display, a sound output, a vibration output, and a lamp emission) of the user terminal and data for the user terminal to perform a certain operation through communication with the user terminal. The user terminal may also control the output from the user terminal by using pre-stored data, and is not limited thereto.

In the following present disclosure, the meaning of transmitting and receiving information or data to and from a user (or user account) may include the meaning of transmitting and receiving information or data to and from a device (or user terminal) corresponding to or interlocked with the user (or user account).

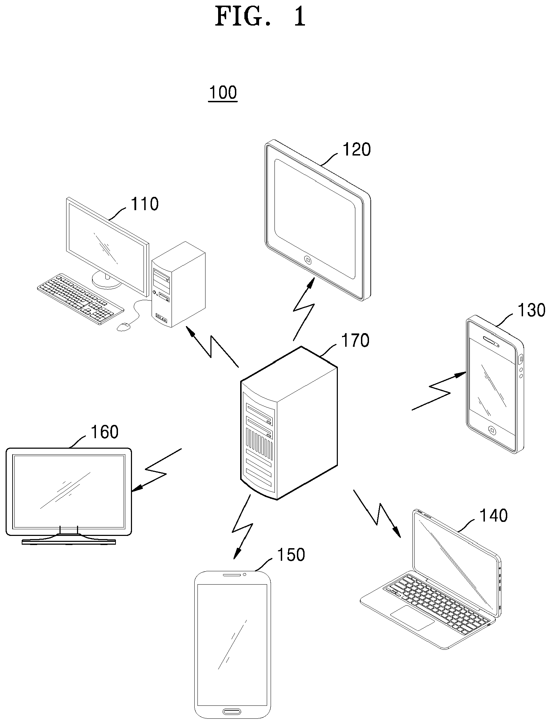

FIG. 1 illustrates a game providing system 100 including a server and a user terminal, according to various embodiments.

The game providing system 100 of the present disclosure may include a server 170 and at least one user terminals 110 to 160. The server 170 may provide various online activities through a network. The server 170 may simultaneously provide online activities to the at least one user terminal 110 to 160.

According to an embodiment of the present disclosure, the server 170 may include a single server, a set of servers, a cloud server, or the like, and is not limited thereto. The server 170 may provide various online activities, and may include a database for storing data for online activities. In addition, the server 170 may include a payment server that generates and processes payment events. As described above, the server 170 may be a game providing apparatus.

According to an embodiment of the present disclosure, a network may mean a connection established (or formed) by using all communication methods, and may mean a communication network connected through all communication methods, the communication network being configured to transmit and receive data between a terminal and a terminal or between a terminal and a server.

All communication methods may include all communication methods such as communication through a certain communication standard, a certain frequency band, a certain protocol, or a certain channel. For example, all communication methods may include communication methods through Bluetooth, Bluetooth Low Energy (BLE), Zigbee, Third Generation (3G), long-term evolution (LTE), ultrasound, or the like, and may include all of the short-distance communication, long-distance communication, wireless communication, and wired communication. However, the present disclosure is not limited thereto.

According to an embodiment of the present disclosure, the short-range communication method may mean a communication method in which communication is possible only when a device (terminal or server) performing communication is within a certain range, and may include, for example, Bluetooth, Near Field Communication (NFC), or the like. The long-distance communication method may mean a communication method in which a device performing communication may communicate regardless of a distance. For example, the long-distance communication method may mean a method in which two devices performing communication through a repeater such as an access point (AP) may communicate even when a distance therebetween is greater than or equal to a certain distance, and may include a communication method using a cellular network (3G, LTE) such as short message service (SMS) or telephone. However, the present disclosure is not limited thereto. The meaning of being provided with online activities by using a network may include the meaning that communication between a server and a terminal may be performed through all communication methods.

Throughout the specification, the at least one user terminal 110 to 160 may include a personal computer 110, a tablet 120, a cellular phone 130, a notebook 140, a smartphone 150, a television (TV) 160, as well as various electronic devices such as a personal digital assistant (PDA), a portable multimedia player (PMP), a navigation device, an MP3 player, a digital camera, a refrigerator, a washing machine, a vacuum cleaner, or the like, and are not limited thereto. As described above, the at least one user terminal 110 to 160 may each be a game providing device.

According to various embodiments of the present disclosure, the at least one user terminal 110 to 160 may each display a user interface for obtaining an input of direction through a touch screen. The at least one user terminal 110 to 160 may each obtain, through the user interface, a user's touch input of dragging from a reference point where a touch is started to a current touch point. The at least one user terminal 110 to 160 may each display an input direction indicator indicating an input direction from the reference point toward the current touch point at a position farther away from the reference point than the current touch point on the user interface, in response to the user's input.

The at least one user terminal 110 to 160 may individually perform a method of providing a touch screen interface according to various embodiments of the present disclosure. However, the present disclosure is not limited thereto. The at least one user terminal 110 to 160 may each display a user interface for obtaining an input of direction through a touch screen under the control by the server 170 through communication with the server 170.

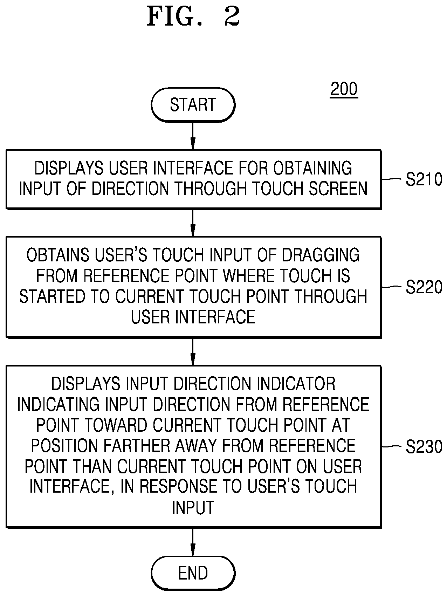

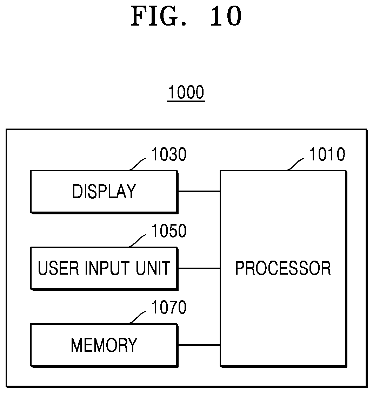

FIG. 2 is a flowchart illustrating method 200 of providing a touch screen interface, according to various embodiments. Such method 200 may be performed by the at least one user terminal 110 to 160 of FIG. 1, a game providing apparatus 1000 shown in FIG. 10, or a processor 1010 of the game providing apparatus 1000.

Referring to FIG. 2, in operation S210, a user terminal may display a user interface for obtaining an input of direction through a touch screen. The user interface may be a graphical user interface (GUI) for obtaining a user's direction input operation in a user terminal having a touch screen.

In various embodiments, the user interface may be an interface for moving an object to be operated. The object to be operated may be any graphic element that may be moved by a user's operation. For example, the object to be operated may be a player character (PC) or thing that a user may control in a virtual space. However, the present disclosure is not limited thereto.

In an embodiment, the user interface for obtaining an input of direction may be displayed when a movement operation is required. For example, the user interface may be displayed only in a situation where the object to be operated may be operated, otherwise, the user interface may be removed from a screen.

In an embodiment, the user interface for obtaining an input of direction may be displayed overlaid on other screen elements displayed on the touch screen. In an embodiment, the user interface may be translucently displayed so that other screen elements are not covered. In an embodiment, the transparency of each of elements in the user interface may be different from each other.

In operation S220, the user terminal may obtain a user's touch input of dragging from a reference point where a touch is started to a current touch point through the user interface. The user terminal may determine a direction from the reference point where a touch is started toward the current touch point as an input direction. The user may change the input direction while maintaining the input of direction by continuously dragging without releasing his/her hand after the touch.

In operation S230, the user terminal may display an input direction indicator indicating the input direction from the reference point toward the current touch point at a position farther away from the reference point than the current touch point on the user interface, in response to the user's touch input. In an embodiment, a direction indicated by the input direction indicator may be dynamically changed as the current touch point is changed while the user's touch input is continued.

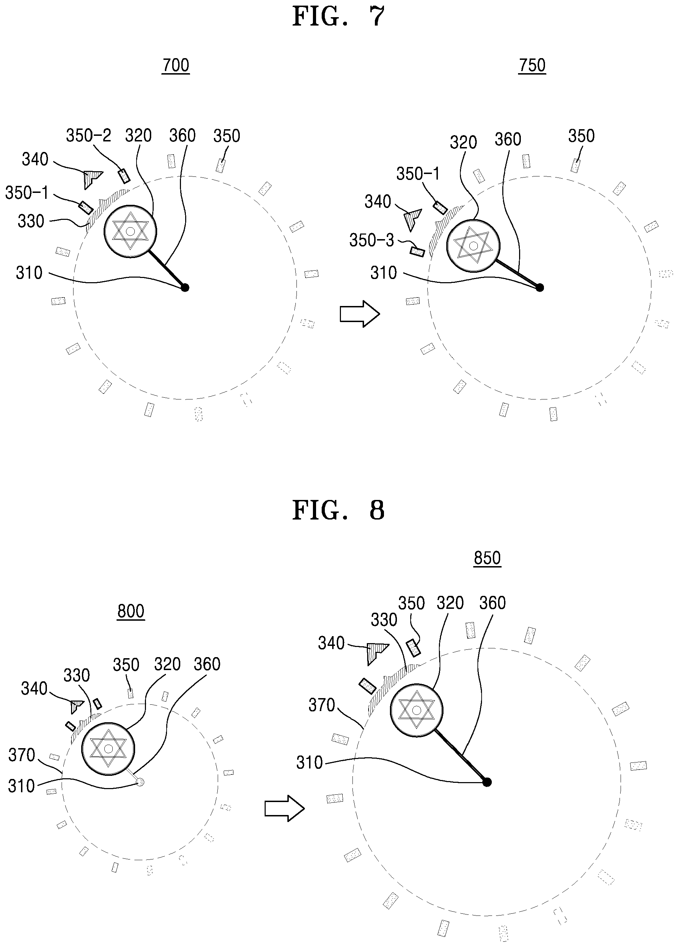

In an embodiment, the size of the input direction indicator may increase as a distance between the reference point and the current touch point increases. In an embodiment, a distance between the reference point and the input direction indicator may increase in proportion to the distance between the reference point and the current touch point. In an embodiment, the sharpness of the input direction indicator may increase as the distance between the reference point and the current touch point increases. In an embodiment, the shape of the input direction indicator may be determined according to the distance between the reference point and the current touch point. In an embodiment, the size, distance, sharpness, or shape of the input direction indicator may be dynamically changed as the current touch point is changed while the user's touch input is continued. This will be described in more detail with reference to FIG. 8.

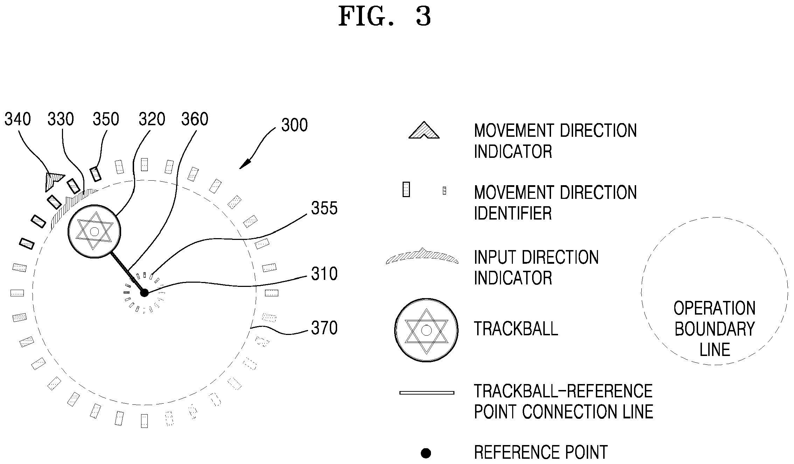

FIG. 3 is a diagram for explaining a configuration of a touch screen interface according to various embodiments.

FIG. 3 illustrates an example of a direction input interface 300 displayed in a user terminal having a touch screen. The direction input interface 300 may be a GUI for obtaining a direction input operation of a user in a user terminal having a touch screen.

In various embodiments, the direction input interface 300 may be an interface for moving an object to be operated. The object to be operated may be any graphic element that may be moved by a user's operation. For example, the object to be operated may be a PC or thing that a user may control in a virtual space.

According to various embodiments of the present disclosure, a user may input a direction by touching and then dragging on the direction input interface 300. The user terminal may determine a direction from a point where a touch is started toward the current touch point as an input direction. The user may change the input direction while maintaining the input of direction by continuously dragging without releasing his/her hand after the touch.

According to various embodiments of the present disclosure, the direction input interface 300 may include a reference point 310, a trackball 320, an input direction indicator 330, a movement direction indicator 340, a first movement direction identifier 350, a second movement direction identifier 355, a trackball-reference point connection line 360, and an operation boundary line 370. However, the direction input interface 300 is not limited to an example of FIG. 3, and more components than those shown in FIG. 3 may be included in the direction input interface 300 or fewer components than those shown in FIG. 3 may be included in the direction input interface 300. In an embodiment, at least one of the movement direction indicator 340, the first movement direction identifier 350, the second movement direction identifier 355, the trackball-reference point connection line 360, and the operation boundary line 370 may not be included in the direction input interface 300. In an embodiment, the components shown in FIG. 3 may not be illustrated or may be omitted under certain conditions.

According to various embodiments of the present disclosure, the reference point 310 may be an interface indicating a reference position of an input of direction. In an embodiment, when a user's drag input is sensed, the reference point 310 may be displayed at a point where the user starts the touch. In an embodiment, when there is no input of direction by the user, the reference point 310 may be displayed at a default position. In another embodiment, when there is no input of direction by the user, the reference point 310 may not be displayed.

According to various embodiments of the present disclosure, the trackball 320 may be an interface indicating a point currently being touched by the user. In an embodiment, a position of the trackball 320 may be changed to a current touch point in real time while the user continues the drag input. In an embodiment, when there is no input of direction by the user, the trackball 320 may be displayed at a default position. In another embodiment, when there is no input of direction by the user, the trackball 320 may not be displayed.

According to various embodiments of the present disclosure, the input direction indicator 330 may be an interface indicating a current input direction, that is, a direction from a reference point 310 toward a current touch point. For example, the input direction indicator 330 may be displayed as an arrow indicating an input direction. In an embodiment, the input direction indicator 330 may be displayed when a user's drag input is sensed. In an embodiment, a direction indicated by the input direction indicator 330 may be dynamically changed as the current touch point is changed while the user's touch input is continued.

The input direction indicator 330 is displayed at a position farther away from a reference point 310 than a current touch point. In other words, a distance between the reference point 310 and the input direction indicator 330 may be greater than a distance between the reference point 310 and the current touch point. The input direction indicator 330 is displayed outside the operation boundary line 370.

According to various embodiments of the present disclosure, the movement direction indicator 340 may be an interface indicating a movement direction of an object to be operated, the movement direction being determined according to a current input direction. For example, the movement direction indicator 340 may be displayed as an arrow indicating a movement direction.

In an embodiment, the object to be operated may move in all directions, and the movement direction may be the same as the input direction. That is, the user terminal may move the object to be operated in the input direction. In another embodiment, a direction in which the object to be operated may move may be preset, and the movement direction may be determined based on the input direction.

In an embodiment, the movement direction indicator 340 may be displayed when a user's drag input is sensed. In an embodiment, a direction indicated by the movement direction indicator 340 may be dynamically changed as the current touch point is changed while the user's touch input is continued.

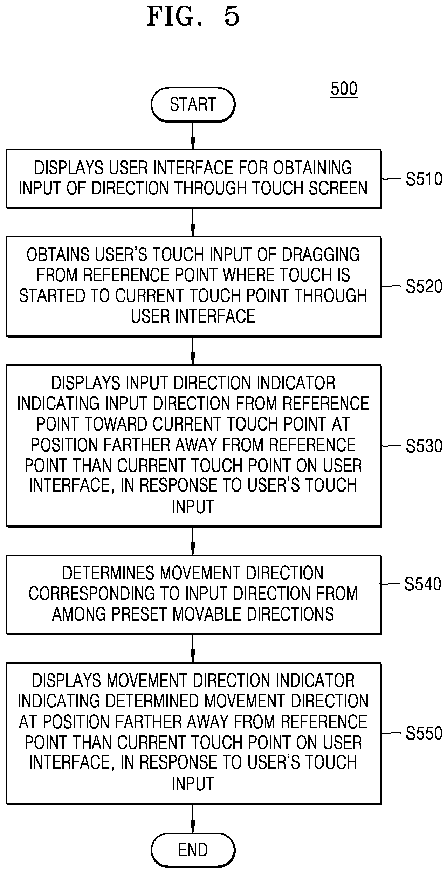

In an embodiment, the movement direction indicator 340 may be displayed when directions in which the object to be operated may move and a range of an input direction corresponding to each of movable directions are preset. In other words, the movement direction indicator 340 may not be displayed when the object to be operated may move in all directions, but may be displayed only when the movement direction is limited, that is, when the input direction is different from the movement direction. In this case, directions indicated by the input direction indicator 330 and the movement direction indicator 340 may be different. This will be described in more detail with reference to FIGS. 5 to 7.

In another embodiment, the movement direction indicator 340 may always be displayed regardless of the setting of the movement direction. In other words, the movement direction indicator 340 may be displayed both when the object to be operated may move in all directions and when the movement direction is limited.

In an embodiment, the movement direction indicator 340 may be displayed at a position farther away from the reference point 310 than the current touch point. In other words, a distance between the reference point 310 and the movement direction indicator 340 may be greater than a distance between the reference point 310 and the current touch point. For example, the movement direction indicator 340 may be displayed outside the operation boundary line 370.

According to various embodiments of the present disclosure, the first movement direction identifier 350 and the second movement direction identifier 355 may each be an interface indicating a range of an input direction corresponding to each of movable directions. For example, when a movable direction is preset, the first movement direction identifier 350 and the second movement direction identifier 355 may include scales indicating boundaries in which the movement direction is changed according to the input direction. In an embodiment, the first movement direction identifier 350 and the second movement direction identifier 355 may each be displayed when a user's drag input is sensed.

In an embodiment, when directions in which the object to be operated may move and a range of an input directions corresponding to each of movable directions are preset, the first movement direction identifier 350 and the second movement direction identifier 355 may be displayed. In other words, the first movement direction identifier 350 and the second movement direction identifier 355 may not be displayed when the object to be operated may move in all directions, but may be displayed only when a movement direction is limited, that is, when the input direction is different from the movement direction.

In an embodiment, the first movement direction identifier 350 may be displayed at a position farther away from the reference point 310 than the current touch point, and the second movement direction identifier 355 may be displayed around the reference point 310. For example, the first movement direction identifier 350 may be displayed outside the operation boundary line 370. In an embodiment, only one of the first movement direction identifier 350 and the second movement direction identifier 355 may be displayed.

In an embodiment, the sharpness of scales in the first movement direction identifier 350 and the second movement direction identifier 355 may decrease as the distance between the scales and the current input direction or the current movement direction increases. In other words, a scale in a direction closer to the current input direction or the current movement direction may be opaquely or clearly displayed, and a scale in a direction farther away from the current input direction or the current movement direction may be transparently or blurrily displayed. In an embodiment, the sharpness of scales in the first movement direction identifier 350 and the second movement direction identifier 355 may be dynamically changed as the current touch point is changed while the user's touch input is continued.

According to various embodiments of the present disclosure, the trackball-reference point connection line 360 may be displayed as a straight line connecting the reference point 310 where a touch is started and the trackball 320 indicating a current touch position. The trackball-reference point connection line 360 may be a line indicating the current input direction. In an embodiment, the trackball-reference point connection line 360 may be displayed when a user's drag input is sensed. In an embodiment, the trackball-reference point connection line 360 may be dynamically changed as the current touch point is changed while the user's touch input is continued.

The operation boundary line 370 is an interface indicating a maximum range of an input of direction that a user may perform. In an embodiment, the operation boundary line 370 may indicate a range in which the trackball 320 may be positioned. In an embodiment, the operation boundary line 370 may be a circle using the reference point 310 as a center. In an embodiment, the operation boundary line 370 may be displayed when a user's drag input is sensed. In an embodiment, the operation boundary line 370 may be a virtual area that is not displayed on a touch screen.

In an embodiment, a radius of the operation boundary line 370 may be greater than a distance between the reference point 310 and a current touch point. Accordingly, the operation boundary line 370 may be set to always include the trackball 320.

In an embodiment, the operation boundary line 370 may be a reference that determines positions of the input direction indicator 330, the movement direction indicator 340, and/or the first movement direction identifier 350. For example, the input direction indicator 330, the movement direction indicator 340, and/or the first movement direction identifier 350 may be set to be positioned outside the operation boundary line 370.

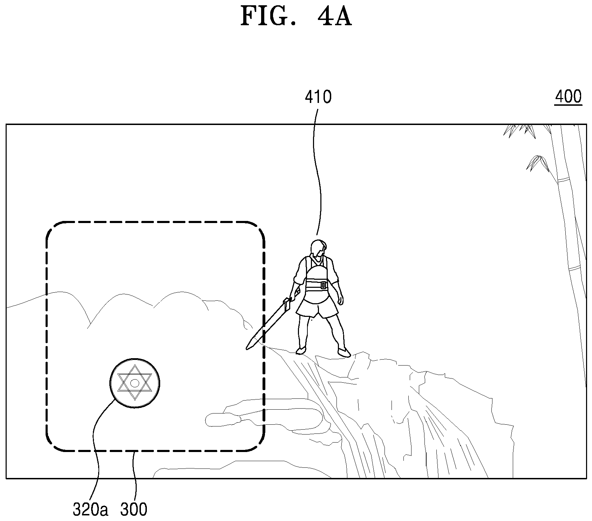

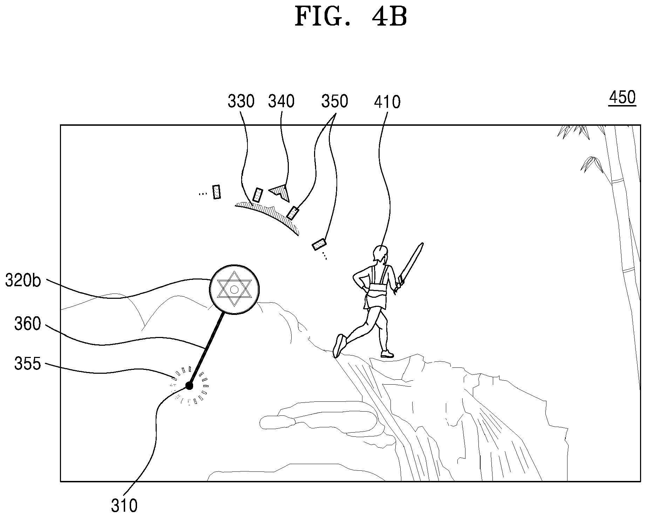

FIGS. 4A and 4B are diagrams each explaining a method of displaying a touch screen interface, according to various embodiments.

FIGS. 4A and 4B respectively show examples 400 and 450 of a game screen on which the direction input interface 300 is displayed in a user terminal. As shown in FIGS. 4A and 4B, the direction input interface 300 may be displayed overlaid on the game screen. In an embodiment, the direction input interface 300 may be a user interface for moving a game character 410 that may be operated by a user. In an embodiment, the direction input interface 300 may be displayed when the game character 410 may be operated. FIGS. 4A and 4B respectively show examples 400 and 450 in which the direction input interface 300 is used in a game application, but it should be understood that the direction input interface 300 may be used to move an operable object in an application other than a game application.

FIG. 4A illustrates example 400 of the direction input interface 300 when a user does not perform an input of direction. In an embodiment, elements in the direction input interface 300 may not be displayed when there is no user's touch input or when a touch gesture other than an input of direction is sensed. For example, when there is no user's touch input or when a touch gesture other than an input of direction is sensed, at least one of the input direction indicator 330, the movement direction indicator 340, the first movement direction identifier 350, the second movement direction identifier 355, the trackball-reference point connection line 360, and the operation boundary line 370 may not be displayed.

In an embodiment, when there is no user's input of direction, the reference point 310 and the trackball 320 may be displayed at a default position 320a. In an embodiment, a user may start an input of direction by touching and dragging the trackball 320 displayed at the default position 320a. In another embodiment, the trackball 320 displayed at the default position 320a is only displayed to indicate a position of the direction input interface 300, and the user may start an input of direction by touching and dragging from any position within an area of the direction input interface 300 as well as the default position 320a. At this time, the reference point 310 may be displayed by being changed to a position where a touch is started.

FIG. 4B illustrates example 450 of the direction input interface 300 while a user is performing an input of direction. In an embodiment, when a user's drag input to input a direction is sensed, the reference point 310, a trackball 320b, the input direction indicator 330, the movement direction indicator 340, the first movement direction identifier 350, the second movement direction identifier 355, and the trackball-reference point connection line 360 may be displayed based on the reference point 310 and a current touch position.

In an embodiment, the user terminal may determine a movement direction of the game character 410, which is an object to be operated, based on a user's touch input through the direction input interface 300. The user terminal may move the game character 410 in a determined movement direction.

According to the above-described embodiments, even while the user performs a touch input to operate a direction, an input direction, a movement direction, and/or a boundary in which the movement direction is changed may be displayed at a position not covered by a touch input subject. Accordingly, the user may clearly and intuitively check a current input state and a movement state performed as a result of an input, thereby increasing the convenience of operation.

FIG. 5 is a flowchart illustrating method 500 of providing a touch screen interface, according to various embodiments. Such method 500 may be performed by the at least one user terminal 110 to 160 of FIG. 1, the game providing apparatus 1000 shown in FIG. 10, or the processor 1010 of the game providing apparatus 1000.

Referring to FIG. 5, in operation S510, a user terminal may display a user interface for obtaining an input of direction through a touch screen. In operation S520, the user terminal may obtain a user's touch input of dragging from a reference point where a touch is started to a current touch point through the user interface. In operation S530, the user terminal may display an input direction indicator indicating an input direction from the reference point toward the current touch point at a position farther away from the reference point than the current touch point on the user interface, in response to the touch input of the user. Operations S510 to S530 may respectively correspond to operations S210 to S230 of FIG. 2, and thus redundant descriptions thereof are omitted.

In operation S540, the user terminal may determine a movement direction corresponding to the input direction from among preset movable directions.

In an embodiment, directions in which an object to be operated may move and a range of an input direction corresponding to each of movable directions may be preset. The user terminal may determine a direction corresponding to a current input direction from among the movable directions as a movement direction.

For example, directions in which the object to be operated may move may be set to be eight directions, and eight input direction ranges may correspond to the movable directions, respectively. Eight movable directions may be set as up, down, left, right, upper left, lower left, upper right, and lower right directions. By limiting the movable directions to eight directions to correspond to directions that may be input with a combination of arrow keys on a keyboard, the operation feeling of the keyboard may be similarly reproduced on a touch screen.

As another example, directions in which the object to be operated may move may be set to be sixteen directions, and sixteen input direction ranges may respectively correspond to the movable directions. As another example, directions in which the object to be operated may move may be set to be thirty-two directions, and thirty-two input direction ranges may respectively correspond to the movable directions. However, the present disclosure is not limited thereto.

In another embodiment, the object to be operated may move in all directions, and the user terminal may determine the input direction as a movement direction.

In an embodiment, the movable directions of the object to be operated may be set by the user. For example, the user may select one of cases of eight directions, sixteen directions, thirty two directions, and unlimited directions as the movable directions of the object to be operated. However, the present disclosure is not limited thereto. In an embodiment, the user terminal may determine the movement direction on the basis of the movable directions selected by the user.

In an embodiment, the user terminal may determine a moving speed of the object to be operated on the basis of a user input through the user interface. In an embodiment, the user terminal may determine the moving speed according to a distance from a point where a touch is started to a current touch point. For example, when the distance from the reference point to the current touch point is less than or equal to a certain reference distance, the moving speed may be determined as a first speed, and when the distance from the reference point to the current touch point is greater than the reference distance, the moving speed may be determined as a second speed which is faster than the first speed. However, the present disclosure is not limited thereto, and the moving speed may also be determined according a plurality of reference distances instead of one reference distance.

In operation S550, the user terminal may display a movement direction indicator indicating the determined movement direction at a position farther away from the reference point than the current touch point on the user interface, in response to the user's touch input In an embodiment, a direction indicated by the movement direction indicator may be dynamically changed as the current touch point is changed while the user's touch input is continued.

In an embodiment, the user terminal may further display a movement direction identifier indicating a range of an input direction corresponding to each of the movable directions on the user interface, in response to the user's touch input. In an embodiment, the movement direction identifier may be displayed at at least one of a position farther away from the reference point than the current touch point and a position around the reference point.

In an embodiment, the movement direction indicator and the movement direction identifier may be displayed when directions in which the object to be operated may move and a range of an input direction corresponding to each of the movable directions are preset. In other words, the movement direction indicator and the movement direction identifier may not be displayed when the object to be operated may move in all directions, but may be displayed only when the movement direction is limited, that is, when the input direction is different from the movement direction. In this case, directions indicated by the input direction indicator and the movement direction indicator may be different. In another embodiment, the movement direction indicator may always be displayed regardless of the setting of the movement direction. In other words, the movement direction indicator may be displayed both when the object to be operated may move in all directions and when the movement direction is limited.

In an embodiment, the size of the movement direction indicator or the movement direction identifier may increase as the distance between the reference point and the current touch point increases. In an embodiment, the distance between the reference point and the movement direction indicator or the movement direction identifier may increase in proportion to the distance between the reference point and the current touch point. In an embodiment, the sharpness of the movement direction indicator or the movement direction identifier may increase as the distance between the reference point and the current touch point increases. In an embodiment, the shape of the movement direction indicator may be determined according to the distance between the reference point and the current touch point. In an embodiment, the size, distance, sharpness, or shape of the movement direction indicator or the movement direction identifier may be dynamically changed as the current touch point is changed while the user's touch input is continued. This will be described in more detail with reference to FIG. 8.

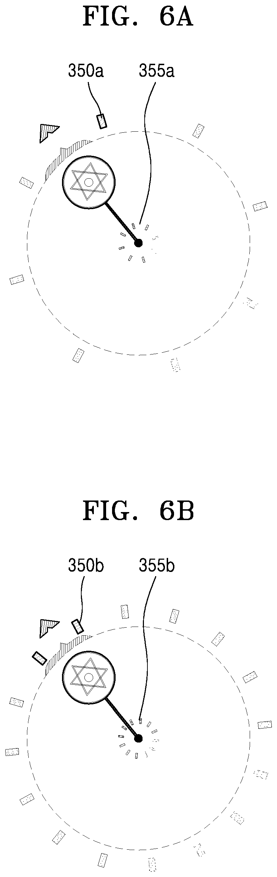

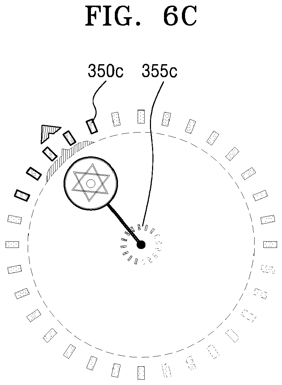

FIGS. 6A, 6B, and 6C are diagrams each explaining a configuration of a touch screen interface, according to various embodiments.

FIGS. 6A, 6B, and 6C show an example of a direction input interface displayed in a user terminal when movable directions are set to eight directions, sixteen directions, and thirty-two directions, respectively. First movement direction identifiers 350a, 350b, and 350c and second movement direction identifiers 355a, 355b, and 355c in the direction input interface may indicate eight, sixteen, and thirty-two input direction ranges corresponding to eight, sixteen, and thirty-two movable directions, respectively. In an embodiment, scales in the first movement direction identifiers 350a, 350b, and 350c and the second movement direction identifiers 355a, 355b, and 355c may indicate boundaries of each of input direction ranges.

In an embodiment, the input direction ranges corresponding to movable directions may be set equally. For example, when there are n movable directions, the input direction ranges may be a range obtained by dividing 360 degrees by n. In another embodiment, the input direction ranges corresponding to the movable directions may be set differently. For example, an input direction range corresponding to a left-right direction may be set to be greater than an input direction range corresponding to an up-down direction, or vice versa. Accordingly, the operation sensitivity in a particular direction may be set greater or less.

FIG. 7 is a diagram for explaining an operation of a touch screen interface, according to various embodiments.

Referring to FIG. 7, an example of a direction input interface in case 700 in which an input direction is a first direction and case 750 in which the input direction is changed to a second direction is illustrated, according to an embodiment of the present disclosure. The direction input interface may include the reference point 310, the trackball 320, the input direction indicator 330, the movement direction indicator 340, a movement direction identifier 350, the trackball-reference point connection line 360, and the operation boundary line 370. The components of the direction input interface may respectively correspond to the reference point 310, the trackball 320, the input direction indicator 330, the movement direction indicator 340, the first movement direction identifier 350, the trackball-reference point connection line 360, and the operation boundary line 370, and thus redundant descriptions thereof are omitted.

In an embodiment, the user terminal may display the movement direction identifier 350 indicating ranges of input directions corresponding to preset movable directions, according to a user's touch input. The movement direction identifier 350 may include scales 350-1, 350-2, 350-3 indicating boundaries of the input direction ranges.

In an embodiment, according to the user's touch input, the user terminal may determine a direction connecting a current touch point from the reference point 310 as an input direction. The user terminal may display the input direction indicator 330 indicating the determined input direction. The user terminal may determine a range in which the input direction is included from among the input direction ranges, and may determine a movable direction corresponding to the included range as a movement direction. The user terminal may display the movement direction indicator 340 indicating the determined movement direction.

For example, in case 700 in which the input direction is the first direction, the input direction indicator 330 may be displayed to point to the first direction. The user terminal may identify that the first direction, which is the current input direction, is included in a first input direction range defined between a direction of the scale 350-1 and a direction of the scale 350-2, and determine a movable direction corresponding to the first input direction range as the movement direction. The movement direction indicator 340 may be displayed between the direction of the scale 350-1 and the direction of the scale 350-2 to indicate the movement direction.

For example, even when the current touch point is changed as the user continues a drag input, when the current input direction does not deviate from the first input direction range, the position of the movement direction indicator 340 may not be changed.

For example, in case 750 in which the current input direction is changed to the second direction out of the first input direction range as the user continues the drag input, the input direction indicator 330 may be displayed to point to the second direction. The user terminal may identify that the second direction, which is the current input direction, is included in a second input direction range defined between the direction of the scale 350-1 and a direction of the scale 350-3, and determine a movable direction corresponding to the second input direction range as a changed movement direction. The position of the movement direction indicator 340 may be changed between the direction of the scale 350-1 and the direction of the scale 350-3 to indicate the changed movement direction. Accordingly, when the position of the input direction indicator 330 is continuously changed while passing the scales 350-1, 350-2, and 350-3 of the movement direction identifier 350, the position of the movement direction indicator 340 may be discontinuously changed.

According to the above-described embodiments, a user may easily identify a current input direction, a current movement direction, and an input direction required to change the movement direction through a movement direction indicators and a movement direction identifier. In addition, the user may clearly recognize that a movement direction is determined and changed as a result of an actual input. Therefore, a more delicate and accurate direction operation is possible.

FIG. 8 is a diagram for explaining an operation of a touch screen interface, according to various embodiments.

Referring to FIG. 8, an example of a direction input interface in case 800 in which a distance between a reference point and a current touch point is a first distance and case 850 in which the distance between the reference point and the current touch point increases to a second distance greater than the first distance is illustrated, according to an embodiment of the present disclosure. The direction input interface may include the reference point 310, the trackball 320, the input direction indicator 330, the movement direction indicator 340, the movement direction identifier 350, the trackball-reference point connection line 360, and the operation boundary line 370. The components of the direction input interface may respectively correspond to the reference point 310, the trackball 320, the input direction indicator 330, the movement direction indicator 340, the first movement direction identifier 350, the trackball-reference point connection line 360, and the operation boundary line 370, and thus redundant descriptions thereof are omitted.

In various embodiments, the size of at least some components in the direction input interface may increase as the distance between the reference point 310 and the current touch point increases. In various embodiments, the size of at least some components in the direction input interface may be dynamically changed as the current touch point is changed while the user's touch input is continued.

In an embodiment, the size of the input direction indicator 330 may increase as the distance between the reference point 310 and the current touch point increases. In other words, the input direction indicator 330 may be displayed smaller as the current touch point is closer to the reference point 310, and may be displayed larger as the current touch point is farther away from the reference point 310.

In an embodiment, the size of the movement direction indicator 340 may increase as the distance between the reference point 310 and the current touch point increases. In other words, the movement direction indicator 340 may be displayed smaller as the current touch point is closer to the reference point 310, and may be displayed larger as the current touch point is further away from the reference point 310.

In an embodiment, the size of the movement direction identifier 350 may increase as the distance between the reference point 310 and the current touch point increases. In other words, the movement direction identifier 350 may be displayed smaller as the current touch point is closer to the reference point 310, and may be displayed larger as the current touch point is further away from the reference point 310.

In an embodiment, a range of the operation boundary line 370 may be determined based on a distance between the reference point 310 and the current touch point. For example, as the distance between the reference point 310 and the current touch point increases, the range of the operation boundary line 370 may increase.

In an embodiment, a minimum size of the operation boundary line 370 may be preset. For example, the operation boundary line 370 at a minimum size may be displayed until a drag input of the user is started and the distance between the reference point 310 and the current touch point is less than a certain distance. In an embodiment, a maximum size of the operation boundary line 370 may be preset. For example, when the current touch point is far away from the reference point 310 in a distance greater than or equal to a certain distance, the size of the operation boundary line 370 may be fixed to the maximum size, and even when the user's drag input continues outside the operation boundary line 370, the position of the trackball 320 may be inside the operation boundary line 370. In this case, the user terminal may consider that the current touch point is the position of the trackball 320 inside the operation boundary line 370.

In an embodiment, the operation boundary line 370 may be a reference that determines the positions of the input direction indicator 330, the movement direction indicator 340, and/or the movement direction identifier 350. For example, the input direction indicator 330, the movement direction indicator 340, and/or the movement direction identifier 350 may be set to be positioned outside the operation boundary line 370. In an embodiment, when the operation boundary line 370 is expanded based on a distance between the reference point 310 and the current touch point, the input direction indicator 330, the movement direction indicator 340, and/or the movement direction identifier 350 may also be expanded together to be positioned outside the operation boundary line 370.

In various embodiments, a distance between at least some components in the direction input interface and the reference point 310 may increase as the distance between the reference point 310 and the current touch point increases. In various embodiments, a distance between at least some components in the direction input interface and the reference point 310 may be dynamically changed as the current touch point is changed while the user's touch input is continued.

In an embodiment, the distance between the reference point 310 and the input direction indicator 330 may increase in proportion to the distance between the reference point 310 and the current touch point. In other words, as the current touch point is farther away from the reference point 310, the input direction indicator 330 may also be displayed at a position farther away from the reference point 310. For example, in the case where the input direction indicator 330 is displayed outside the operation boundary line 370, when the operation boundary line 370 is expanded as the distance between the reference point 310 and the current touch point increases, the input direction indicator 330 may also be expanded together to be displayed outside the operation boundary line 370.

In an embodiment, a distance between the reference point 310 and the movement direction indicator 340 may increase in proportion to a distance between the reference point 310 and the current touch point. In other words, as the current touch point is farther away from the reference point 310, the movement direction indicator 340 may also be displayed at a position farther away from the reference point 310. For example, in the case where the movement direction indicator 340 is displayed outside the operation boundary line 370, when the operation boundary line 370 is expanded as the distance between the reference point 310 and the current touch point increases, the movement direction indicator 340 may also be expanded together to be displayed outside the operation boundary line 370.

In an embodiment, a distance between the reference point 310 and the movement direction identifier 350 may increase in proportion to a distance between the reference point 310 and the current touch point. In other words, as the current touch point is farther away from the reference point 310, the movement direction identifier 350 may also be displayed at a position farther away from the reference point 310. For example, in the case where the movement direction identifier 350 is displayed outside the operation boundary line 370, when the operation boundary line 370 is expanded as the distance between the reference point 310 and the current touch point increases, the movement direction identifier 350 may also be expanded together to be displayed outside the operation boundary line 370.

In various embodiments, the sharpness of at least some components in the direction input interface may increase as the distance between the reference point 310 and the current touch point increases. In various embodiments, the sharpness of at least some components in the direction input interface may be dynamically changed as the current touch point is changed while the user's touch input is continued.

In an embodiment, the sharpness of the reference point 310 and the trackball-reference point connection line 360 may increase as the distance between the reference point 310 and the current touch point increases. In other words, the reference point 310 and the trackball-reference point connection line 360 may be transparently or blurrily displayed as the current touch point is closer to the reference point 310, and may be opaquely or clearly displayed as the current touch point is farther away from the reference point 310.

In an embodiment, the sharpness of the input direction indicator 330 may increase as the distance between the reference point 310 and the current touch point increases. In other words, the input direction indicator 330 may be transparently or blurrily displayed as the current touch point is closer to the reference point 310, and may be opaquely or clearly displayed as the current touch point is farther away from the reference point 310.

In an embodiment, the sharpness of the movement direction indicator 340 may increase as the distance between the reference point 310 and the current touch point increases. In other words, the movement direction indicator 340 may be transparently or blurrily displayed as the current touch point is closer to the reference point 310, and may be opaquely or clearly displayed as the current touch point is farther away from the reference point 310.

In an embodiment, the sharpness of the movement direction identifier 350 may increase as the distance between the reference point 310 and the current touch point increases. In other words, the movement direction identifier 350 may be transparently or blurrily displayed as the current touch point is closer to the reference point 310, and may be opaquely or clearly displayed as the current touch point is farther away from the reference point 310.

In an embodiment, a change in the size, distance, and/or sharpness of the movement direction identifier 350 may be equally applied to a first movement direction identifier displayed at a position farther from the reference point 310 than the current touch point and a second movement direction identifier displayed around the reference point 310. In another embodiment, the change in size, distance, and/or sharpness of the movement direction identifier 350 may be applied only to the first movement direction identifier and not to the second movement direction identifier. That is, the size, distance, and/or sharpness of the second movement direction identifier may not change even when the current touch point is changed.

In various embodiments, the shape of at least some components in the direction input interface may be determined based on a distance between the reference point 310 and the current touch point. In various embodiments, the shape of at least some components in the direction input interface may be dynamically changed as the current touch point is changed while the user's touch input is continued.

In an embodiment, the shape of the input direction indicator 330 may be determined based on a distance between the reference point 310 and the current touch point. For example, when the distance between the reference point 310 and the current touch point is less than or equal to a certain reference distance, the input direction indicator 330 may be displayed in a first shape, and when the distance between the reference point 310 and the current touch point is greater than the reference distance, the input direction indicator 330 may be displayed in a second shape. As another example, the shape of the input direction indicator 330 may be continuously changed from the first shape to the second shape as the distance between the reference point 310 and the current touch point increases. As another example, when the distance between the reference point 310 and the current touch point is greater than a certain reference distance, a visual effect may be additionally displayed on the input direction indicator 330. However, the present disclosure is not limited thereto, and the shape of the input direction indicator 330 may also be determined according to a plurality of reference distances instead of one reference distance. In an embodiment, when a moving speed of an operable object is determined according to a distance between the reference point 310 and the current touch point, the shape of the input direction indicator 330 may indicate the moving speed.

In an embodiment, the shape of the movement direction indicator 340 may be determined based on the distance between the reference point 310 and the current touch point. For example, when the distance between the reference point 310 and the current touch point is less than or equal to a certain reference distance, the movement direction indicator 340 may be displayed in a first shape, and when the distance between the reference point 310 and the current touch point is greater than the reference distance, the movement direction indicator 340 may be displayed in a second shape. As another example, the shape of the movement direction indicator 340 may be continuously changed from the first shape to the second shape as the distance between the reference point 310 and the current touch point increases. As another example, when the distance between the reference point 310 and the current touch point is greater than a certain reference distance, a visual effect may be additionally displayed on the movement direction indicator 340. However, the present disclosure is not limited thereto, and the shape of the movement direction indicator 340 may also be determined according to a plurality of reference distances instead of one reference distance. In an embodiment, when a moving speed of an operable object is determined according to a distance between the reference point 310 and the current touch point, the shape of the movement direction indicator 340 may indicate the moving speed.

According to the above-described embodiments, while the user continues the touch input to operate a direction, an input direction, a movement direction, and/or a boundary at which the movement direction is changed may be displayed by dynamically changing the position and shape. That is, even when the user's touch point is changed, information about the input direction, the movement direction, and/or the boundary at which the movement direction is changed may be displayed at a position which is not covered by a touch input subject. Therefore, the user may clearly and intuitively check a current state of an input and a state of movement performed as a result of an input without stopping the input, regardless of a direction of operation.

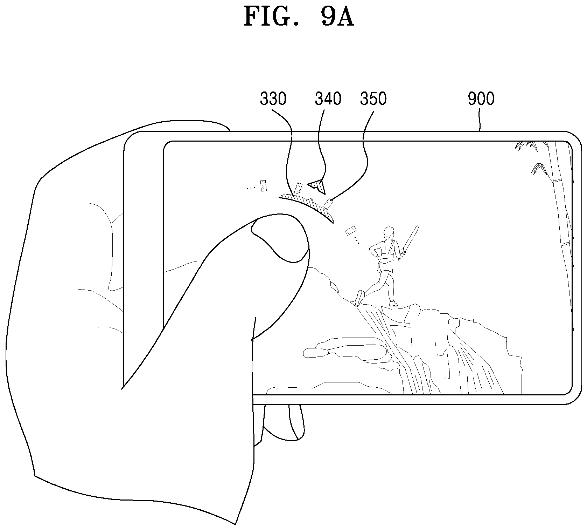

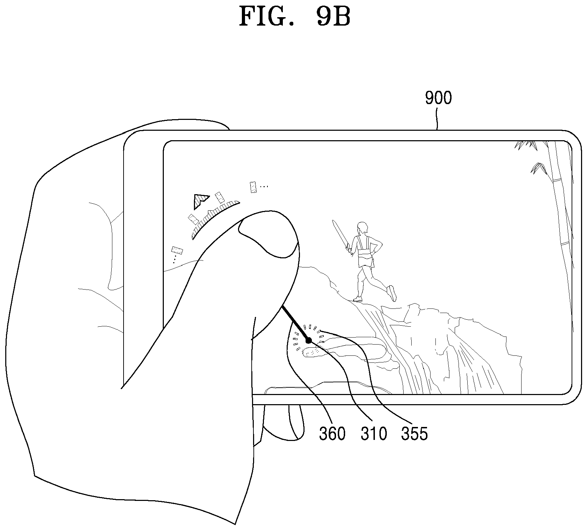

FIGS. 9A and 9B are diagrams each illustrating an embodiment of using a touch screen interface of the present disclosure.

FIG. 9A illustrates an example in which as user performs a touch input through a direction input interface according to various embodiments of the present disclosure in a user terminal 900 having a touch screen. To perform a touch input on a GUI displayed on the touch screen, a portion of the GUI is inevitably covered by the user's touch input subject. As shown in FIG. 9A, the reference point 310, which is a point where the touch input is started, or the trackball 320 indicating a current touch point may be covered by the user's hand while the touch input continues and may not be visible.

However, according to various embodiments, the input direction indicator 330, the movement direction indicator 340, and the first movement direction identifier 350 may be displayed at a position farther away from the reference point 310 than the current touch point. Accordingly, the user may clearly recognize an input direction, a movement direction, and/or a boundary at which the movement direction is changed due to a current touch input without being disturbed by the touch input subject.

FIG. 9B illustrates another example in which the user performs a touch input through a direction input interface according to various embodiments of the present disclosure in the user terminal 900 having the touch screen. Depending on a direction of the touch input, the visibility of the input direction indicator 330, the movement direction indicator 340, and the first movement direction identifier 350 may decrease. For example, as shown in FIG. 9B, when the user inputs a direction toward a left side or a bottom side with his/her left hand, the input direction indicator 330, the movement direction indicator 340, and the movement direction identifier 350 may be positioned at an edge of a screen or outside the screen, or may be covered by the user's hand.

However, in this case, because the reference point 310, the second movement direction identifier 355, and the trackball-reference point connection line 360 are not covered by the touch input subject, recognition of the user's input direction may be aided.

FIG. 10 is a diagram for explaining a detailed configuration of a game providing apparatus 1000 according to various embodiments.

As shown in FIG. 10, the game providing apparatus 1000 according to some embodiments may include at least one processor 1010, a display 1030, a user input unit 1050, and a memory 1070. However, not all of the components shown in FIG. 10 are essential components of the game providing apparatus 1000. The game providing apparatus 1000 may be implemented by more components than those shown in FIG. 10, or the game providing apparatus 1000 may be implemented by fewer components than those shown in FIG. 10. The game providing apparatus 1000 may be a user terminal, a server, a game network system, or a separate apparatus.

According to an embodiment of the present disclosure, the processor 1010 controls all operations of the game providing apparatus 1000. For example, the processor 1010 may generally control the display 1030, the user input unit 1050, the memory 1070, or the like by executing a program stored in the memory 1070. The processor 1010 may control an operation of the game providing apparatus 1000 in the present disclosure by controlling the display 1030, the user input unit 1050, the memory 1070, or the like.

According to an embodiment of the present disclosure, the processor 1010 may be configured to control a touch screen to display a user interface for obtaining an input of direction through the touch screen, obtain a user's touch input of dragging from a reference point where a touch is started to a current touch point through the user interface, and control the touch screen to display an input direction indicator indicating an input direction from the reference point toward the current touch point at a position farther away from the reference point than the current touch point on the user interface in response to the user's touch input.

According to an embodiment, the size of the input direction indicator may be set to increase as the distance between the reference point and the current touch point increases.

According to an embodiment, the size of the input direction indicator may be set to be dynamically changed as the current touch point is changed while the user's touch input is continued.

According to an embodiment, the user interface may be configured to be displayed overlaid on other screen elements displayed on the touch screen, and the sharpness of the input direction indicator may be set to increase as the distance between the reference point and the current touch point increases.

According to an embodiment, the processor 1010 may be further configured to determine a movement direction corresponding to the input direction from among preset movable directions, and control the touch screen to display a movement direction indicator indicating the determined movement direction at a position farther away from the reference point than the current touch point on the user interface in response to the user's touch input.

According to an embodiment, the size of the movement direction indicator may be set to increase as the distance between the reference point and the current touch point increases, and the size of the movement direction indicator may be set to be dynamically changed as the current touch point is changed while the user's touch input is continued.

According to an embodiment, the preset movable directions may be set to have eight directions, sixteen directions, thirty-two directions, or unlimited directions.

According to an embodiment, the processor 1010 may be further configured to control the touch screen to display a movement direction identifier indicating a range of an input direction corresponding to each of the preset movable directions on the user interface in response to the user's touch input.

According to an embodiment, the movement direction identifier may be configured to be displayed at at least one of a position farther away from the reference point than the current touch point and a position around the reference point.

According to an embodiment, the size of the movement direction identifier may be set to increase as the distance between the reference point and the current touch point increases, and the size of the movement direction identifier may be set to be dynamically changed as the current touch point is changed while the user's touch input is continued.

According to an embodiment, the processor 1010 may be further configured to move an object to be operated in the movement direction.

According to an embodiment, the moving speed of the object to be operated may be set to be determined based on the distance between the reference point and the current touch point.

According to an embodiment, the processor 1010 may be further configured to control the touch screen to display a connection line connecting the reference point and the current touch point on the user interface in response to the user's touch input.

According to an embodiment, the user interface may be configured to be displayed overlaid on other screen elements displayed on the touch screen, and the sharpness of the connection line may be set to increase as the distance between the reference point and the current touch point increases.

The display 1030 may display and output information processed by the game providing apparatus 1000. The display 1030 may include at least one of a liquid crystal display, a thin film transistor-liquid crystal display, an organic light-emitting diode, a flexible display, a three-dimensional (3D) display, and an electrophoretic display. When the display 1030 and a touchpad form a layered structure to form a touch screen, the display 1030 may be used as an input device in addition to an output device. In addition, the display 1030 may include a light emitting diode (LED) lamp, a vibration motor, a speaker, a flash, or the like, but is not limited thereto.

According to various embodiments of the present disclosure, the display 1030 may be a display forming a touch screen by being coupled to the user input unit 1050. The display 1030 may output a screen including a user interface according to various embodiments of the present disclosure under the control by the processor 1010.

The user input unit 1050 means a unit for a user to input data for controlling the game providing apparatus 1000. For example, the user input unit 1050 may include devices capable of receiving various types of user inputs, such as a keyboard, a physical button, a mouse, a joystick, a touch screen, a touch pad, a camera, or a microphone. For example, the user input unit 1050 may include various interfaces such as a keypad, a dome switch, a voice input interface, a fingerprint input interface, a touch input interface (a contact capacitance method, a pressure resistance film method, an infrared sensing method, a surface ultrasonic conduction method, an integral tension measurement method, a piezo effect method, or the like), a camera, a jog wheel, and a jog switch, and may also line various sensors, such as an acceleration sensor, a position sensor, a temperature sensor, and an optical sensor, with the user interface. However, the present disclosure is not limited thereto, and the user input unit 1050 may include a device supporting various inputs.

According to various embodiments of the present disclosure, the user input unit 1050 may be a touch input interface forming a touch screen by being coupled to the display 1030. According to various embodiments of the present disclosure, the user input unit 1050 may obtain a user's touch input for inputting a direction.

The memory 1070 may store a program for processing and controlling the processor 1010, and may also store data input to the game providing apparatus 1000 or output from the game providing apparatus 1000.

According to an embodiment of the present disclosure, the processor 1010 may execute a method of controlling a touch screen device by using the program stored in the memory 1070.

According to an embodiment of the present disclosure, the memory 1070 may include at least one type of storage medium from among a flash memory type, a hard disk type, a multimedia card micro type, a card type memory (e.g., secure digital (SD) or extreme digital (XD) memory, or the like), random access memory (RAM), static RAM (SRAM), read-only memory (ROM), electrically erasable programmable ROM (EEPROM), programmable ROM (PROM), a magnetic memory, a magnetic disk, and an optical disk. Also, according to an embodiment of the present disclosure, programs stored in the memory 1070 may be classified into a plurality of modules according to functions thereof.

According to an embodiment of the present disclosure, a method of controlling a touch screen device may be performed by the game providing apparatus 1000, a server, or a user terminal, and in addition, at least one configuration in the game providing apparatus 1000 may perform embodiments described above with reference to FIGS. 1 to 9.

In addition, the method of controlling a touch screen device may be performed individually or together by the server and the user terminal.

The apparatus described above may be implemented as a hardware component, a software component, and/or a combination of the hardware component and the software component. For example, devices and components described in the embodiments may be implemented using one or more general-purpose computers or special-purpose computers, such as a processor, a controller, an arithmetic logic unit (ALU), a digital signal processor, a microcomputer, a programmable gate array (FPGA), a programmable logic unit (PLU), a microprocessor, or any other device capable of executing and responding to instructions. A processing device may execute an operating system (OS) and one or more software applications executed on the OS. In addition, the processing device may also access, store, operate, process, and generate data in response to execution of software. For convenience of understanding, although one processing device is sometimes described as being used, one of ordinary skill in the art may know that the processing device includes a plurality of processing elements and/or a plurality of types of processing elements. For example, the processing device may include a plurality of processors or one processor and one controller. Also, other processing configurations are also possible, such as parallel processors.

Software may include a computer program, code, instructions, or a combination of one or more thereof, and may configure the processing device to operate as desired or, independently or collectively, instruct the processing device. Software and/or data may be permanently or temporarily embodied in any type of machine, component, physical device, virtual equipment, computer storage medium or device, or transmitted signal wave to be interpreted by a processing device or to provide instructions or data to the processing device. Software may be distributed over networked computer systems and stored or executed in a distributed manner. Software and data may be stored in one or more computer-readable recording media.

The method according to the embodiment may be implemented in the form of program instructions that may be executed through various computer units and recorded in a computer-readable recording medium. The computer-readable recording medium may include program instructions, data files, data structures, or the like, alone or in combination. The program instructions recorded on the medium may be specially designed and configured for the embodiment, or may be known and available to those skilled in the art of computer software. Examples of the computer-readable recording medium include hardware devices specially configured to store and execute program instructions such as a magnetic medium such as a hard disk, an optical medium such as a CD-ROM and a DVD, a magneto-optical medium such as a floptical disk, ROM, RAM, flash memory, or the like. Examples of program instructions include not only machine language code such as those generated by a compiler, but also high-level language code that may be executed by a computer using an interpreter or the like. The hardware devices described above may be configured to operate as one or more software modules to perform operations of the embodiments, and vice versa.

As described above, although the embodiments have been described with reference to the limited embodiments and drawings, various modifications and variations are possible from the above description by those skilled in the art. For example, even if the described techniques are performed in an order different from the described method, and/or the described components such as a system, a structure, a device, a circuit, or the like are combined or grouped in a different form from the described method, or replaced or substituted by other components or equivalents, appropriate results may be achieved.

According to various embodiments of the present disclosure, a method of providing a GUI for inputting a direction through a touch screen may be provided.

According to various embodiments of the present disclosure, when a user inputs a direction through a touch screen, a method of allowing the user to clearly and intuitively recognizing an input state and a result of an input may be provided.

According to various embodiments of the present disclosure, a method of allowing a user to delicately and accurately perform a direction operation through a touch screen may be provided.

## Claims

1. A method of controlling a touch screen device, the method comprising:
displaying a user interface (300) for obtaining an input of direction through a touch screen;
obtaining a user's touch input of dragging from a reference point (310) where a touch is started to a current touch point (320) through the user interface (300); and
displaying an input direction indicator (300) at a position farther away from the reference point (310) than the current touch point (320) on the user interface (300), in response to the user's touch input;
**characterized in that** the input direction indicator (300) indicates by its position with respect to the reference point an input direction from the reference point (310) towards the current touch point (320); and
the input direction indicator (330) is positioned outside an area indicating a maximum range of an input of direction that the user may perform.

2. The method of claim 1, wherein a size of the input direction indicator (330) increases as a distance between the reference point (310) and the current touch point (320) increases.

3. The method of claim 2, wherein the size of the input direction indicator (330) is dynamically changed as the current touch point (320) is changed while the touch input of the user is continued.

4. The method of claim 1, wherein the displaying of the user interface (300) comprises displaying the user interface (300) overlaid on other screen elements displayed on the touch screen, and
a transparency of the input direction indicator (330) increases as a distance between the reference point (310) and the current touch point (320) increases.

5. The method of claim 1, further comprising:
determining a movement direction corresponding to the input direction from among preset movable directions; and
displaying a movement direction indicator indicating the determined movement direction at a position farther away from the reference point (310) than the current touch point (320) on the user interface (300), in response to the user's touch input.

6. The method of claim 5, wherein a size of the movement direction indicator increases as a distance between the reference point (310) and the current touch point (320) increases, and
the size of the movement direction indicator is dynamically changed as the current touch point (320) is changed while the touch input of the user is continued.

7. The method of claim 5, wherein the preset movable directions are set to be one of cases of eight directions, sixteen directions, or thirty-two directions.

8. The method of claim 5, further comprising displaying a movement direction identifier indicating a range of an input direction corresponding to each of the preset movable directions on the user interface (300), in response to the user's touch input.

9. The method of claim 8, wherein the displaying of the movement direction identifier comprises displaying the movement direction identifier at at least one of a position farther away from the reference point (310) than the current touch point (320) and a position around the reference point.

10. The method of claim 8, wherein a size of the movement direction identifier increases as a distance between the reference point (310) and the current touch point (320) increases, and
the size of the movement direction identifier is dynamically changed as the current touch point (320) is changed while the touch input of the user is continued.

11. The method of claim 5, further comprising moving an object to be operated in the movement direction.

12. The method of claim 11, wherein a moving speed of the object to be operated is determined based on a distance between the reference point (310) and the current touch point.

13. The method of claim 1, further comprising displaying a connection line connecting the reference point (310) and the current touch point (320) on the user interface (300), in response to the user's touch input.

14. The method of claim 13, wherein the displaying of the user interface (300) comprises displaying the user interface (300) overlaid on other screen elements displayed on the touch screen, and
a transparency of the connection line increases as a distance between the reference point (310) and the current touch point (320) increases.

15. A game providing apparatus (1000) comprising:
a touch screen;
a memory (1070) storing instructions; and
at least one processor (1010) operatively coupled to the touch screen and the memory and configured to execute the instructions,
wherein the at least one processor (1010) is configured to execute the instructions to:
control the touch screen to display a user interface (300) for obtaining an input of direction through the touch screen;
obtain a user's touch input of dragging from a reference point (310) where a touch is started to a current touch point (320) through the user interface (300); and
control the touch screen to display an input direction indicator (330) at a position farther away from the reference point (310) than the current touch point (320) on the user interface (300), in response to the user's touch input;
**characterized in that** the input direction indicator (300) indicates by its position with respect to the reference point an input direction from the reference point (310) towards the current touch point (320); and
the input direction indicator (330) is positioned outside an area indicating a maximum range of an input direction that the user may perform.

## Patentansprüche

1. Ein Verfahren zum Steuern eines Berührungsbildschirmgeräts, wobei das Verfahren Folgendes beinhaltet:
Anzeigen einer Benutzerschnittstelle (300) zum Erhalten einer Eingabe einer Richtung durch einen Berührungsbildschirm;
Erhalten einer Benutzer-Berührungseingabe des Ziehens von einem Bezugspunkt (310), an dem eine Berührung anfängt, zu einem aktuellen Berührungspunkt (320) durch die Benutzerschnittstelle (300); und
Anzeigen eines Eingaberichtungsindikators (300) an einer Position, die von dem Bezugspunkt (310) weiter entfernt ist als der aktuelle Berührungspunkt (320), auf der Benutzerschnittstelle (300) als Reaktion auf die Benutzer-Berührungseingabe;
**dadurch gekennzeichnet, dass** der Eingaberichtungsindikator (300) durch seine Position in Bezug auf den Bezugspunkt eine Eingaberichtung von dem Bezugspunkt (310) hin zu dem aktuellen Berührungspunkt (320) angibt; und
der Eingaberichtungsindikator (330) außerhalb einer Region positioniert ist, die einen Maximalbereich einer Eingabe einer Richtung, die der Benutzer durchführen kann, angibt.

2. Verfahren gemäß Anspruch 1, wobei eine Größe des Eingaberichtungsindikators (330) mit zunehmender Entfernung zwischen dem Bezugspunkt (310) und dem aktuellen Berührungspunkt (320) zunimmt.

3. Verfahren gemäß Anspruch 2, wobei die Größe des Eingaberichtungsindikators (330) mit Änderung des aktuellen Berührungspunktes (320), während die Berührungseingabe des Benutzers fortgesetzt wird, dynamisch geändert wird.

4. Verfahren gemäß Anspruch 1, wobei das Anzeigen der Benutzerschnittstelle (300) das Anzeigen der Benutzerschnittstelle (300), sodass sie andere Bildschirmelemente, die auf dem Berührungsbildschirm angezeigt werden, überlagert, beinhaltet und
eine Transparenz des Eingaberichtungsindikators (330) mit zunehmender Entfernung zwischen dem Bezugspunkt (310) und dem aktuellen Berührungspunkt (320) zunimmt.

5. Verfahren gemäß Anspruch 1, das ferner Folgendes beinhaltet:
Bestimmen einer Bewegungsrichtung, die der Eingaberichtung entspricht, aus voreingestellten bewegbaren Richtungen; und
Anzeigen eines Bewegungsrichtungsindikators, der die bestimmte Bewegungsrichtung angibt, an einer Position, die von dem Bezugspunkt (310) weiter entfernt ist als der aktuelle Berührungspunkt (320), auf der Benutzerschnittstelle (300) als Reaktion auf die Benutzer-Berührungseingabe.

6. Verfahren gemäß Anspruch 5, wobei eine Größe des Bewegungsrichtungsindikators mit zunehmender Entfernung zwischen dem Bezugspunkt (310) und dem aktuellen Berührungspunkt (320) zunimmt und
die Größe des Bewegungsrichtungsindikators mit Änderung des aktuellen Berührungspunktes (320), während die Berührungseingabe des Benutzers fortgesetzt wird, dynamisch geändert wird.

7. Verfahren gemäß Anspruch 5, wobei die voreingestellten Bewegungsrichtungen als einer von Fällen von acht Richtungen, sechzehn Richtungen oder zweiunddreißig Richtungen eingestellt sind.

8. Verfahren gemäß Anspruch 5, das ferner das Anzeigen eines Bewegungsrichtungsidentifikators, der einen Bereich einer Eingaberichtung entsprechend jeder der voreingestellten Bewegungsrichtungen angibt, auf der Benutzerschnittstelle (300) als Reaktion auf die Benutzer-Berührungseingabe beinhaltet.

9. Verfahren gemäß Anspruch 8, wobei das Anzeigen des Bewegungsrichtungsidentifikators das Anzeigen des Bewegungsrichtungsidentifikators an mindestens einer von einer Position, die weiter von dem Bezugspunkt (310) entfernt ist als der aktuelle Berührungspunkt (320), und einer Position um den Bezugspunkt herum beinhaltet.

10. Verfahren gemäß Anspruch 8, wobei eine Größe des Bewegungsrichtungsidentifikators mit zunehmender Entfernung zwischen dem Bezugspunkt (310) und dem aktuellen Berührungspunkt (320) zunimmt und
die Größe des Bewegungsrichtungsidentifikators mit Änderung des aktuellen Berührungspunktes (320), während die Berührungseingabe des Benutzers fortgesetzt wird, dynamisch geändert wird.

11. Verfahren gemäß Anspruch 5, das ferner das Bewegen eines zu betätigenden Objekts in der Bewegungsrichtung beinhaltet.

12. Verfahren gemäß Anspruch 11, wobei eine Bewegungsgeschwindigkeit des zu betätigenden Objekts auf der Basis einer Entfernung zwischen dem Bezugspunkt (310) und dem aktuellen Berührungspunkt bestimmt wird.

13. Verfahren gemäß Anspruch 1, das ferner das Anzeigen einer Verbindungslinie, die den Bezugspunkt (310) und den aktuellen Berührungspunkt (320) verbindet, auf der Benutzerschnittstelle (300) als Reaktion auf die Benutzer-Berührungseingabe beinhaltet.

14. Verfahren gemäß Anspruch 13, wobei das Anzeigen der Benutzerschnittstelle (300) das Anzeigen der Benutzerschnittstelle (300), sodass sie andere Bildschirmelemente, die auf dem Berührungsbildschirm angezeigt werden, überlagert, beinhaltet und eine Transparenz der Verbindungslinie mit zunehmender Entfernung zwischen dem Bezugspunkt (310) und dem aktuellen Berührungspunkt (320) zunimmt.

15. Eine Spielbereitstellungsvorrichtung (1000), die Folgendes beinhaltet:
einen Berührungsbildschirm;
einen Speicher (1070), der Anweisungen speichert; und
mindestens einen Prozessor (1010), der betriebsfähig mit dem Berührungsbildschirm und dem Speicher gekoppelt ist und zur Ausführung der Anweisungen konfiguriert ist, wobei der mindestens eine Prozessor (1010) konfiguriert ist, um die Anweisungen für Folgendes auszuführen:
Steuern des Berührungsbildschirms zum Anzeigen einer Benutzerschnittstelle (300) zum Erhalten einer Eingabe einer Richtung durch den Berührungsbildschirm;
Erhalten einer Benutzer-Berührungseingabe des Ziehens von einem Bezugspunkt (310), an dem eine Berührung anfängt, zu einem aktuellen Berührungspunkt (320) durch die Benutzerschnittstelle (300); und
Steuern des Berührungsbildschirms zum Anzeigen eines Eingaberichtungsindikators (330) an einer Position, die von dem Bezugspunkt (310) weiter entfernt ist als der aktuelle Berührungspunkt (320), auf der Benutzerschnittstelle (300) als Reaktion auf die Benutzer-Berührungseingabe;
**dadurch gekennzeichnet, dass** der Eingaberichtungsindikator (300) durch seine Position in Bezug auf den Bezugspunkt eine Eingaberichtung von dem Bezugspunkt (310) hin zu dem aktuellen Berührungspunkt (320) angibt; und
der Eingaberichtungsindikator (330) außerhalb einer Region positioniert ist, die einen Maximalbereich einer Eingaberichtung, die der Benutzer durchführen kann, angibt.

## Revendications

1. Un procédé de commande d'un dispositif à écran tactile, le procédé comprenant :
l'affichage d'une interface utilisateur (300) pour obtenir une entrée de direction par l'intermédiaire d'un écran tactile ;
l'obtention d'une entrée tactile d'un utilisateur consistant à faire glisser depuis un point de référence (310) où un contact a été commencé jusqu'à un point de contact actuel (320) par l'intermédiaire de l'interface utilisateur (300) ; et
l'affichage d'un indicateur de direction d'entrée (300) à une position plus éloignée du point de référence (310) que ne l'est le point de contact actuel (320) sur l'interface utilisateur (300), en réponse à l'entrée tactile de l'utilisateur ;
**caractérisé en ce que** l'indicateur de direction d'entrée (300) indique, par sa position par rapport au point de référence, une direction d'entrée depuis le point de référence (310) vers le point de contact actuel (320) ; et
l'indicateur de direction d'entrée (330) est positionné à l'extérieur d'une zone indiquant un intervalle maximal d'une entrée de direction que l'utilisateur peut réaliser.

2. Le procédé de la revendication 1, dans lequel une taille de l'indicateur de direction d'entrée (330) augmente tandis qu'une distance entre le point de référence (310) et le point de contact actuel (320) augmente.

3. Le procédé de la revendication 2, dans lequel la taille de l'indicateur de direction d'entrée (330) est amenée à changer dynamiquement tandis que le point de contact actuel (320) est amené à changer tandis que l'entrée tactile de l'utilisateur est amenée à continuer.

4. Le procédé de la revendication 1, dans lequel l'affichage de l'interface utilisateur (300) comprend l'affichage de l'interface utilisateur (300) superposée sur d'autres éléments d'écran affichés sur l'écran tactile, et
une transparence de l'indicateur de direction d'entrée (330) augmente tandis qu'une distance entre le point de référence (310) et le point de contact actuel (320) augmente.

5. Le procédé de la revendication 1, comprenant en outre :
la détermination d'une direction de déplacement correspondant à la direction d'entrée parmi des directions mobiles préétablies ; et
l'affichage d'un indicateur de direction de déplacement indiquant la direction de déplacement déterminée à une position plus éloignée du point de référence (310) que ne l'est le point de contact actuel (320) sur l'interface utilisateur (300), en réponse à

6. Le procédé de la revendication 5, dans lequel une taille de l'indicateur de direction de déplacement augmente tandis qu'une distance entre le point de référence (310) et le point de contact actuel (320) augmente, et
la taille de l'indicateur de direction de déplacement est amenée à changer dynamiquement tandis que le point de contact actuel (320) est amené à changer tandis que l'entrée tactile de l'utilisateur est amenée à continuer.

7. Le procédé de la revendication 5, dans lequel les directions mobiles préétablies sont établies pour être l'un des cas parmi huit directions, seize directions, ou trente-deux directions.

8. Le procédé de la revendication 5, comprenant en outre l'affichage d'un identificateur de direction de déplacement indiquant un intervalle d'une direction d'entrée correspondant à chacune des directions mobiles préétablies sur l'interface utilisateur (300), en réponse à l'entrée tactile de l'utilisateur.

9. Le procédé de la revendication 8, dans lequel l'affichage de l'identificateur de direction de déplacement comprend l'affichage de l'identificateur de direction de déplacement à au moins une position parmi une position plus éloignée du point de référence (310) que ne l'est le point tactile actuel (320), et une position autour du point de référence.

10. Le procédé de la revendication 8, dans lequel une taille de l'identificateur de direction de déplacement augmente tandis qu'une distance entre le point de référence (310) et le point de contact actuel (320) augmente, et
la taille de l'identificateur de direction de déplacement est amenée à changer dynamiquement tandis que le point de contact actuel (320) est amené à changer tandis que l'entrée tactile de l'utilisateur est amenée à continuer.

11. Le procédé de la revendication 5, comprenant en outre le déplacement d'un objet amené à être opéré selon la direction de déplacement.

12. Le procédé de la revendication 11, dans lequel une vitesse de déplacement de l'objet devant être amené à fonctionner est déterminée sur la base d'une distance entre le point de référence (310) et le point de contact actuel.

13. Le procédé de la revendication 1, comprenant en outre l'affichage d'une ligne de connexion connectant le point de référence (310) et le point de contact actuel (320) sur l'interface utilisateur (300), en réponse à l'entrée tactile de l'utilisateur.

14. Le procédé de la revendication 13, dans lequel l'affichage de l'interface utilisateur (300) comprend l'affichage de l'interface utilisateur (300) superposée sur d'autres éléments d'écran affichés sur l'écran tactile, et
une transparence de la ligne de connexion augmente tandis qu'une distance entre le point de référence (310) et le point de contact actuel (320) augmente.

15. Un appareil fournissant un jeu (1000) comprenant :
un écran tactile ;
une mémoire (1070) stockant des instructions ; et
au moins un processeur (1010) couplé de façon opérationnelle à l'écran tactile et à la mémoire et configuré pour exécuter les instructions,
dans lequel l'au moins un processeur (1010) est configuré pour exécuter les instructions afin :
de commander l'écran tactile pour qu'il affiche une interface utilisateur (300) afin d'obtenir une entrée de direction par l'intermédiaire de l'écran tactile ;
d'obtenir une entrée tactile d'un utilisateur consistant à faire glisser depuis un point de référence (310) où un contact a été commencé jusqu'à un point de contact actuel (320) par l'intermédiaire de l'interface utilisateur (300) ; et
de commander l'écran tactile pour qu'il affiche un indicateur de direction d'entrée (330) à une position plus éloignée du point de référence (310) que ne l'est le point de contact actuel (320) sur l'interface utilisateur (300), en réponse à l'entrée tactile de l'utilisateur ; **caractérisé en ce que** l'indicateur de direction d'entrée (300) indique, par sa position par rapport au point de référence, une direction d'entrée depuis le point de référence (310) vers le point de contact actuel (320) ; et
l'indicateur de direction d'entrée (330) est positionné à l'extérieur d'une zone indiquant un intervalle maximal d'une direction d'entrée que l'utilisateur peut réaliser.
